(19) **Europäisches Patentamt European Patent Office Office européen des brevets**

(11) **EP 2 377 467 A1**

(12) **EUROPEAN PATENT APPLICATION**

(43) Date of publication:
**19.10.2011 Bulletin 2011/42**

(51) Int Cl.:
*A61B 6/03* (2006.01)   *G01N 23/04* (2006.01)
*G01V 5/00* (2006.01)   *G01N 23/087* (2006.01)

(21) Application number: **11160047.4**

(22) Date of filing: **28.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.04.2010 CH 5112010**

(71) Applicant: **CSEM Centre Suisse d'Electronique et de Microtechnique SA - Recherche et Développement 2002 Neuchâtel (CH)**

(72) Inventors:
• **Nüesch, Joachim 8004, Zürich (CH)**
• **Seitz, Peter 8902, Urdorf (CH)**

(74) Representative: **Schneider Feldmann AG Patent- und Markenanwälte Beethovenstrasse 49 Postfach 2792 8022 Zürich (CH)**

(54) **System and method for determining the composition of an object**

(57) The present invention discloses a method for identifying the elemental composition of an object (120) characterized by comprising the following procedures: (210) selecting an energy range of an irradiation energy range according to at least one energy-selection criterion to obtain a selected energy range; (215) selecting, according to at least one element-selection criterion, pure elements and/or compounds for which analysis of said object is performed, to obtain selected elements; (220) determining the absorption coefficient for the selected pure elements and/or compounds according to the selected energy range; (230) determining the integrated density of the selected pure elements and/or compounds. Additional and alternative embodiments are disclosed and claimed.

Figure 2

**Description**

**FIELD OF THE INVENTION**

The present invention relates to the field of imaging and more specifically, to the imaging of an inner structure of an object.

**DESCRIPTION OF THE FIGURES**

These and further features and advantages of the invention will become more clearly understood in the light of the ensuing description of the embodiments thereof, given by way of example only, with reference to the accompanying figures, wherein:

**Figure 1A** is a schematic illustration of a composition determining system operative to identify the composition of an object according to an embodiment of the invention;

**Figure 1B** is a schematic block-diagram illustration of an X-ray detector according to an embodiment of the invention,

**Figure 2** is a flow-chart illustration of a method for identifying elemental composition, according to an embodiment of the invention;

**Figure 3** is an illustration of a graph of the exponent a(Z) as a function of the Atomic Number, according to an embodiment of the invention;

**Figure 4** is an illustration of emitted irradiation intensity as a function of energy of an X-ray source according to an embodiment of the invention;

**Figure 5** is an illustration of the graph of the mass attenuation coefficient for Aluminum as a function of the emitted irradiation energy from an X-ray source and of a selected energy range, according to an embodiment of the invention; and

**Figure 6** is a schematic illustration of the substance densities of an object, according to an embodiment of the invention.

It will be appreciated that for simplicity and clarity of illustration, elements shown in the figures are not necessarily drawn to scale. For example, the dimensions of some of the elements may be exaggerated relative to other elements for clarity. Further, where considered appropriate, reference numerals and/or letters may be repeated among the figures to indicate identical or analogous elements but may not be referenced in the description for all figures.

**BACKGROUND OF THE INVENTION**

One of the most-used techniques for the non-destructive imaging of the inner structure of an object is to irradiate the object with X-ray radiation, to determine the transmitted fraction of the incident radiation, and to visualize the transmitted fraction of X-ray radiation. Thus, structures of different density with respect to X-ray radiation can be made visible. The measured and subsequently visualized transmitted X-ray radiation is hereinafter referred to as "transmission image".

The attenuation of X-ray incident on an object depends on the elemental composition of the object and the irradiation energy range of the X-ray source. More specifically, the thickness, the physical density, and the elementary composition are parameters determining the X-ray properties of the object. The X-ray source is at least characterized by the spectral power density of the emitted X-ray radiation.

If for example the object is irradiated from a single X-ray source that is fixed in space with respect to the irradiated object, the obtainable X-ray density information by the transmission images is two-dimensional. Obtaining 2-D image information from objects is called X-ray radiography. Irradiating an object with X-ray radiation from different angular directions, transmission images visualizing 3-D information such as cross sections of the object can be reconstructed. The corresponding technique is called Computed Tomography (CT). In both cases, the imaged quantity is the local X-ray density, or otherwise stated, the local absorption power of the object's substance with respect to X-ray radiation incident on the object.

It has not been possible until today to discriminate between the different elements of the substance(s) of which the object is composed. In particular, it is not possible to determine whether two objects exhibiting identical X-ray density indeed have the same elemental composition. That is, since different lengths of propagation paths for the X-ray radiation in the two objects and/or the density of the two objects can compensate for their dissimilar elemental compositions of the objects.

Clearly, there are many instances where knowledge of the elemental composition of objects is highly important. For example, in baggage or cargo inspection, it would be highly valuable if explosives could be distinguished from other substances having the same X-ray density. In the medical domain, knowledge of the elemental composition of organic substance can yield a functional image, obviating the need of labeling of the structures of interest prior to their inspection, since the elements themselves of the substance can function as a label. For example, several types of cancer produce micro-calcifications which could be imaged with much higher contrast if the local calcium content could be determined, thus enabling diagnosis of cancerous growth earlier and with higher reliability while not risking damage of the inspected objects (samples, living entities) by labels which otherwise have to be employed.

As is known in the art, a method enabling determining the composition of an object at and closely under the object's surface makes usage of a fluorescence image. More specifically, an object is irradiated by X-rays or an electron beam, causing the energetic excitation of the electrons in the atoms, which in turn causes the emission of photons, which are collected and detected. The detected photons exhibit a characteristic energy range for each element of the object. This technique is called X-ray fluorescence spectroscopy (XRF) and is disclosed by L. S. Birks et al., in "Fluorescent X-Ray spectroscopy" (Anal. Chem., Vol. 25, No. 5, pp. 692-697, 1953). However, the application of this method is limited to the inspection of the outer surface of the object. Because of the attenuation of the fluorescence spectrum by the object itself, it is not possible to apply this method to the elemental imaging of the interior of objects with geometrical dimensions exceeding about 10 micrometers. Furthermore, in this method, the sensitive thickness enabling determining the structure of the object is typically below 1 micrometer.

The elemental composition of thicker objects can be determined by employing a method which makes usage of the K-edges of the X-ray absorption spectrum, as taught in patent application WO 2009/066214. The practical limit of this method lies in the energy range of the photons. The K-edges of the different elements are very widely dispersed in energy. To cover a large number of elements a wide energy range of X-ray radiation must be covered. Also, the K-edges for light elements (below an atomic number of, for example, 25) are in the soft X-ray range (with energy below about 5 keV). At the latter X-ray range, a non-negligible portion of the radiation is absorbed by the object, such that only very small objects, with typical dimensions below 100 micrometers, can be imaged with sufficient contrast. The method disclosed in WO 2009/066214 is further limited by the fact that soft X-rays are strongly attenuated by ambient air. The imaging of light elements in the object can thus only be performed under vacuum. For living matter (animals, plants or cultures of their cells) however, this is not a viable option, as most living matter cannot tolerate low-pressure environments.

The method disclosed by R.E. Alvarez and A. Macovski, in "Energy-selective Reconstructions in X-ray Computerized Tomography", Phys. Med. Biol., Vol. 21, No. 5, pp. 733-744, 1976, (Alvarez et al.) overcomes some of the problems associated with the method using K-edges by exploiting the energy dependence of the three essential interaction mechanisms between X-ray photons and matter, namely the photoelectric effect (PE), Compton scattering (CS) and pair production (PP). According to this method, spectral information and the knowledge of the universal three X-Ray absorption functions ($\mu_{PE}$, $\mu_{CS}$ and $\mu_{PP}$) can be used locally to decompose the measured X-ray absorption into three basic components. It is however asserted in Alvarez et al. et al. that the energy-dependence of the three X-Ray absorption functions ($\mu_{PE}$, $\mu_{CS}$ and $\mu_{PP}$) is independent of the elemental composition, and that it is therefore not possible to deduce the elemental composition with spectral measurements according to this method.

M. Firsching et al. disclose in "Quantitative Material Reconstruction in CT with Spectroscopic X-ray Pixel Detectors - a Simulation Study", 2006 IEEE Nuclear Science Symposium Conference Record, M06-416, pp. 2257-2259 (Firsching et al.), a method of material reconstruction which includes determining the transmittance T(E) of a compound object and derive from it the energy dependent mass attenuation coefficient of the basis material, which can be elements or compounds. The material reconstruction is finalized by mapping the logarithmised transmittance (the logarithmised measured absorption values) with the composition of the basic material (i.e., with the result of the specific density of the basis material times the length of the X-ray path). This mapping requires determining the pseudoinverse of the matrix of the logarithmised transmittance. Firsching et al. further teach that a precondition in order for the abovementioned mapping to be accomplishable is that the number of basis vectors (e.g., mass attenuation coefficients) must be limited by the number of independent energy bins. In addition, Firsching et al. teach that the basis vectors must be linearly independent, which is, however, not necessarily given.

Patent application US2004/0190679 discloses a method for deriving in vivo three component areal density composition of a patient along a transmitted x-ray beam by raster-scanning a collimated x-ray beam across a bony region of the patient, with each point scanned at different energies, and using matrix equations with a priori spectra information to solve for the relative areal density of soft tissue, fat and bone.

For the same reasons outlined in Alvarez et al. and Firsching et al., at most three basic components are distinguishable at best with the method disclosed in US2004/0190679.

More specifically, the methods disclosed by Alvarez et al., Firsching et al. and US2004/0190679 suffer from the same drawback, namely that for most practical medical and technical applications the useful X-ray energy range is so low (typically below 300 keV) such that no pair production can take place and only two basic components are actually distinguishable. Otherwise stated, for practical energy ranges the determinant of the 3x3 matrix required for the determination of three distinct elements or basic components, is exceedingly small (of the order of $10^{-6}$ or $10^{-7}$), thus making a numerical inversion of the 3x3 matrix practically impossible. Only the determinant for a 2x2 matrix is actually derivable with sufficient numerical precision, which manifests the theoretical assertion that only two distinct elements or basic components can be differentiated.

Patent application WO 2008/142446 discloses a method in which the K-edge absorption effect, the photoelectric effect, Compton scattering and pair production effects are exploited. This method includes the acquisition of energy-selective X-ray absorption measurements of an object and of its constituent components (materials, phases, molecules, elements, etc.). Using an undisclosed algorithm, the spectral measurement of the object is then decomposed into the constituents whose spectral characteristics have been measured. However, WO 2008/142446 does not disclose what the constraints, ambiguities and possibilities are regarding these constituent components, nor which energy resolution of the spectral measurements is required.

## DESCRIPTION OF THE INVENTION

It is thus is an object of the present invention to overcome the limitations of the aforementioned methods and to enable determining, non-destructively, the composition of an object for more than two elements or basic materials at a depth of, for example, at least one 100 micrometers from the object's surface using electromagnetic (EM) radiation such as, for example, X-rays in an energy range of interest to medical applications, i.e., below 300 keV (e.g., 12 to 120 keV).

A further object of the invention is to create two-dimensional images of cross-sections or three-dimensional model of the object, based on the determined elemental composition. With the foregoing objects in view, the present invention is achieved with a source of X-rays whose radiation is impinging on an object whose elemental composition is sought, and whose transmitted radiation through the object is detected by at least one X-ray detector operative for example to detect the arrival of an X-ray photon and its energy with an energy resolution of lower than, e.g. 1 keV or by employing an X-ray source having a tuning resolution of for example lower than, e.g., 1 keV. The spectra of transmitted X-ray radiation is further processed in an energy range whose lower limit is given by scattering outside of the object and/or excessive propagation-absorption by the object itself, and whose upper limit is given by the maximum available energy emitted by the X-ray tube and/or excessive scattering in the object; the useful energy range also excludes energies where fluorescence peaks occur. By comparing for each transmission measurement the spectral content of the measured data with the energy-dependent spectral behavior of the individual elements of which the object might be composed, a linear mathematical problem can be formulated, whose solution consists of a vector including entries representing the integrated density of the constituent substances along the corresponding transmission measurement line. This method can be applied for any known X-ray measurement technique, including point-wise transmission measurements, radiographic imaging, as well as 2D and 3D computer tomography.

It should be noted that the term "substance" as used herein can refer to a pure element as well as to a compound.

It should be noted that the term "pure element" as used herein refers to a substance that cannot be broken down chemically into another substance.

It should be noted that the term "compound" as used herein refers to a substance that is a pre-determined mixture of elements which is not changing as a function of time.

The term "propagation-absorption" as used herein is defined as the ratio between EM radiation energy incident on an object and the respective EM radiation energy emanating from the object and may be expressed in units of dB.

The term "absorption coefficient" as used herein is defined as the logarithm of the ratio of electromagnetic (EM) radiation energy being incident on an object and the EM energy of the corresponding EM radiation emanating from the same object divided by the propagation distance in the object.

The term "transmission path" and "propagation path" can be used interchangeably.

The term "integrated density" as used herein is defined as the propagation length in the object times the density of the object along the propagation length. The resulting integrated density can be expressed in units of $kg/m^2$.

Each of the selection criteria outlined herein are referred with respect to each other by a logical "AND".

Summary of the embodiments of the invention:

According to the present invention, spectrally resolved transmission measurements at X-ray energies can be employed to gain information about the composition of the object under study. Embodiments of the invention concern the selection of an energy range, for which transmission measurements are possible in practice and for which the absorption spectrum shows the required dependency as a non-multiplicative function f(E,Z) of X-ray energy E and atomic number Z. Embodiments of the invention disclose reconstruction methods according to which spectrally resolved absorption data can be employed to determine average composition of the object under study in terms of the at least one selected substance. Further embodiments describe the use of tabulated absorption data and/or actually measured absorption spectra of the at least one selected substance to accomplish this reconstruction. Still further embodiments disclose method steps for radiography (creation of two-dimensional X-ray project images), in which the composition of an object under study can be determined along the linear propagation path of the X-rays through the object, resulting in a value in each pixel of the radiographic image that corresponds to the integrated density of the substance composition respective of the propagation path. Yet another embodiment discloses the use of the present invention in Computed Tomography techniques, where two-dimensional or three-dimensional cross sections of an object are reconstructed, and each pixel contains information about the composition of the at least one selected substance for the object under study.

A method for determining the composition of an object according to an embodiment of the invention comprises the following procedures: irradiating the object with X-ray radiation from an X-ray source from a first irradiation direction; determining for each spatially resolvable transmission path respective of the first irradiation direction the propagation-absorption of X-ray radiation by the object for at least one selected energy range to yield propagation-absorption information for a respective at least one selected substance; and determining the integrated density for the at least one selected substance for at least one spatially resolvable transmission path of the first irradiation direction by respectively mapping according to the at least one selected substance the entries of the propagation-absorption dataset with the entries of an absorption-coefficient dataset, wherein the at least one selected substance and the selected energy range are selected according to at least one substance-selection criterion and at least one energy-selection criterion, respectively, in a manner such that a distinguishable dependency exists between the spectral absorption properties for each atomic number of the at least one selected substance and the selected energy range.

According to an embodiment of the invention, the at least one energy-selection criterion defines a lower limit and an upper limit of the selected energy range.

According to an embodiment of the invention, wherein the upper limit is determined according to a threshold defining a maximal percentage of scattering effects with respect to the total mass attenuation effect of the at least one selected substance.

According to an embodiment of the invention the at least one energy-selection criterion defines that maximal 10-90% of the total mass attenuation coefficient are caused by scattering effect.

According to an embodiment of the invention, a lower limit of the selected energy range is selected according to the lowest energy value at which reliable detection of the photons by the X-ray detector is ensured, or, other words, the lower limit of the selected energy range is selected according to the lowest energy value at which enough photons are detectable by X-ray detector.

According to an embodiment of the invention, the at least one energy-selection criterion defines the exclusion of irradiation energies of at least one of the following: energy where fluorescence peaks; and energy where electron excitation peaks occur.

According to an embodiment of the invention, the at least one energy-selection criterion defines the exclusion of irradiation energies that are affected in terms of emitted energy by substances employed by the X-ray source of the composition determining system.

According to an embodiment of the invention, the at least one substance-selection criterion defines that the value of exponent a(Z) in $E^{a(Z)} \cdot Z^{b(E)}$ is unique for all occurring atomic numbers Z.

In embodiments, the at least one substance-selection criterion defines a minimum difference $|a(Z_1) - a(Z2)|$ in the range of, e.g., 0.001 to 0.010 and which may be, for example, 0.002, 0.003, 0.004, 0.005, 0.006, 0.007, 0.008 or 0.009. $Z_1$ and $Z_2$ can be any one of two different atomic numbers.

According to an embodiment of the invention, the method for determining the composition of the object further comprises the following procedure after the step of determining the integrated density for the at least one selected substance for at least one spatially resolvable transmission path of the first irradiation direction: determining for at least one spatially resolvable position in the object the local density of the at least one selected substance.

A composition determining system according to the embodiments of the invention is operative to identify the composition of an object and comprises an X-ray source operative to emit X-rays; and an X-ray detector that enables determining the propagation-absorption of X-rays by the object for a first irradiation direction; wherein the X-ray detector (130) is operatively coupled with: a controller; a storage device comprising a set of instructions; and a power supply; wherein the controller when executing the instructions is at least operative to perform the following procedures based on the determined propagation-absorption: determining, for at least one selected substance and at least one selected energy range, the integrated density in the object for a transmission path respective of the first irradiation direction, wherein the at least one selected substance and the selected energy range are selected according to at least one substance-selection criterion and at least one energy-selection criterion, respectively, such that a distinguishable dependency exists between the spectral absorption properties for each atomic number of the at least one selected substance and the selected energy range.

According to an embodiment of the invention, the controller is operative to determine for a spatially resolvable position in the object by the detector the local density of the at least one selected substance.

An embodiment of the invention discloses the use of the composition determining system for performing any of the procedures disclosed herein.

According the embodiment of the invention, the absorption-coefficient dataset is a matrix whereof each entry is defined by the following expression: $B_{i,j} = \left( \dfrac{\mu}{\rho} \right)_j \left( E_i \right),$ wherein $j$ is the column index of the at least one selected substance, i the row index respective of the at least one selected energy channel, $\mu$ the absorption coefficient for the at least one selected substance and p the density of the at least one selected substance.

According to the embodiments of the invention, the object-absorption dataset is a vector $\overline{\overline{m}}$ whereof each entry represents the propagation-absorption of X-ray radiation by the object respective of the at least one selected energy range for a selected one of the at least one transmission path.

According to the embodiments of the invention, the method for identifying the elemental composition of an object comprises the following procedures prior to irradiating the object with X-rays by the X-ray source from the first irradiation direction: selecting, according to the at least one substance-selection criterion, at least one substance for which analysis of the object is performed to obtain the at least one selected substance; selecting an energy range of an irradiation energy range according to the at least one energy-selection criteria to obtain the selected energy range; and determining the absorption coefficient of the at least one selected substance for the at least one selected X-ray energy range.

The present invention further discloses a composition determining system operative to identify the composition of an object.

In respective embodiments of the invention, each one of the abovementioned method steps can also be performed for at least two, at least three, at least four, up to, for example, at least 20 substances. Correspondingly, the composition determining system is operative to identify and usable for determining the composition of an object for at least two, at least three, at least four, up to, for example, at least 20 substances.

Detailed Description of the embodiments of the invention

The term "three-dimensional model" as used herein refers to a two-dimensional representation of a three-dimensional object and its cross-sections. Accordingly, three-dimensional models may include images generated by computer-tomography e.g., as known in the art.

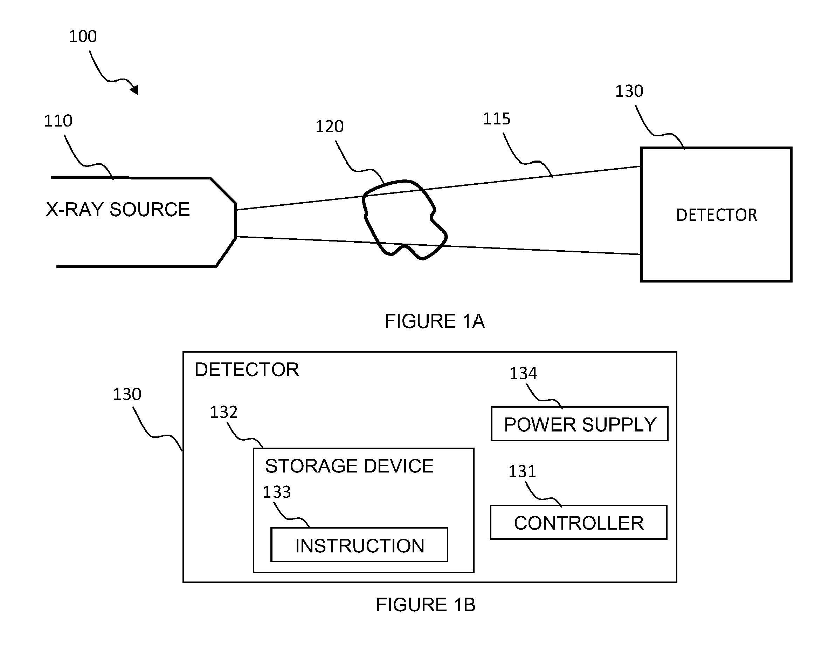

Reference is now made to **Figure 1A.** A composition determining system **100** includes an X-ray source **110** and an X-ray detector **130,** which may, for example, be embodied by a spectrometer. X-ray source **110** is operative to emit an X-ray beam **115,** wherein object **120** and X-ray detector **130** are within the propagation path of X-ray beam **115.**

X-ray detector **130** is operative with a controller **131,** a storage device **132** that includes a set of instructions **133;** and a power supply **134.** Controller **131,** when executing instructions **133** performs at least one of the procedures implementing the method outlined herein. It should be noted that although controller **131,** storage device **132,** instructions **133** and power supply **134** are herein exemplified as being embedded in X-ray detector **130,** this should by no means to be construed as limiting. Accordingly, controller **131** and power supply **134** for example may be external to and operatively coupled with X-ray detector **130.**

As outlined in greater detail herein below, for a selected energy range and selected substances, a distinct or distinguishable dependency exists between the spectral absorption properties for each atomic number of the selected substances and the selected energy range used for irradiating the selected substances. As a consequence, the material reconstruction of an object is, for example, possible for more than two, for more than three or for more than four substances.

Substance Selection:

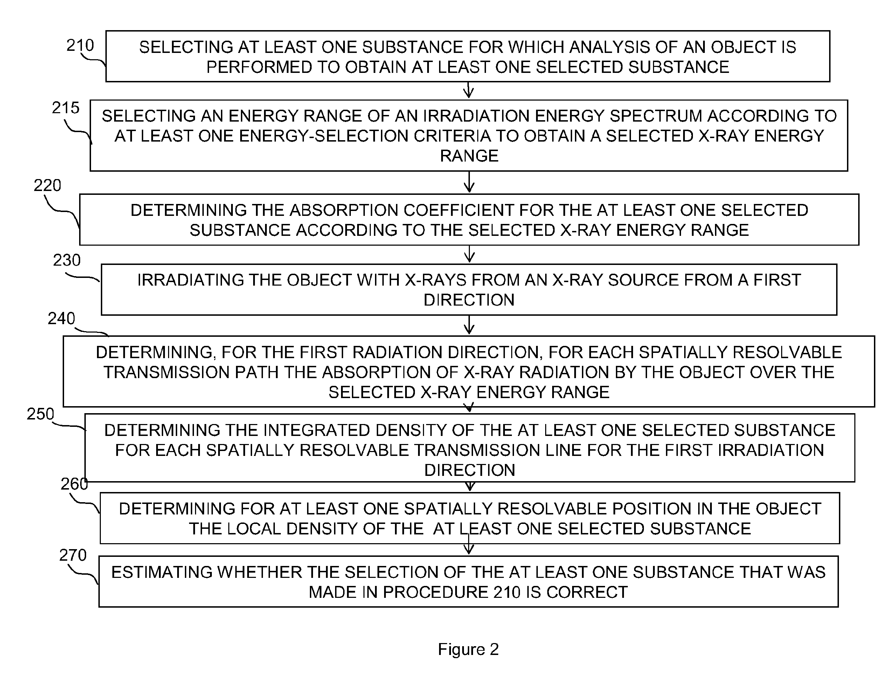

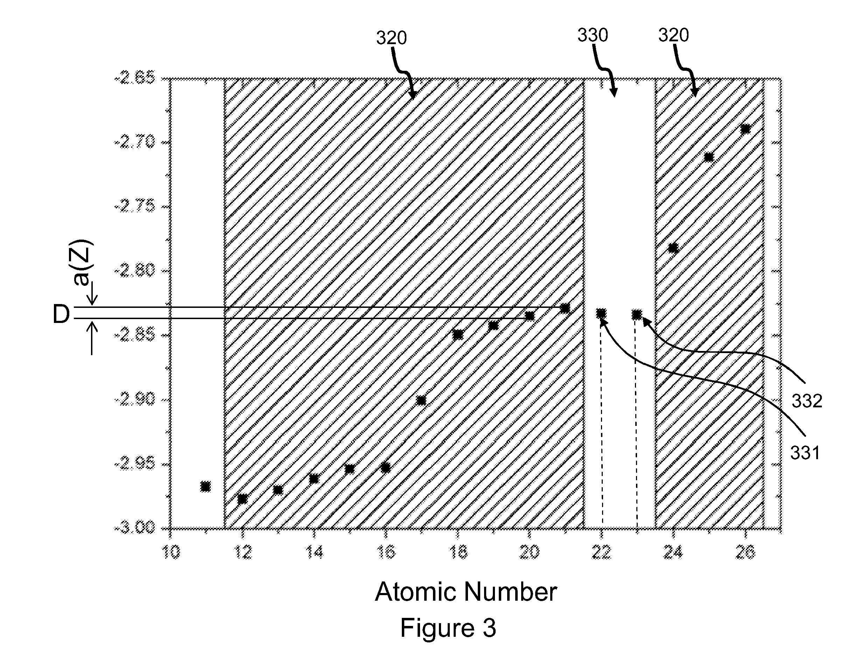

Additional reference is now made to **Figure 2** and **Figure 3.** The method includes according to an embodiment of the invention, as indicated by box **210,** the procedure of selecting at least one substance for which object **120** is analyzed, according to at least one substance-selection criteria to obtain at least one selected substance. According to an embodiment of the invention, the at least one substance-selection criteria defines that for the selection of pure elements, the value for the exponent a(Z) is unique for all occurring Z, in order to provide for unambiguous determination of the elemental composition in object **120.** Correspondingly, the at least one substance-criteria defines with respect to pure elements that each one of the selected pure elements shall exhibit a minimum difference between the values of their exponents a(Z) of, e.g., 0.005. Analogously, with respect to compounds, the at least one substance-selection criteria defines that the exponents a(Z) of each element of the at least one selected compound must have a minimum difference of, e.g., 0.005, with respect to each other.

In addition, for selected substances comprising pure elements and compounds, the values of a(Z) of each element of the least one selected compound must exhibit a minimum difference with respect to the values a(Z) of the at least one selected pure element. For instance, the minimum difference D between any element value a(Z) of the compound and any pure-element values a(Z) may be defined such to exhibit a difference of, for example, 0.005. Summarizing, the condition of the minimal difference of $|a(Z_1) - a(Z_2)|$ must be met for all values of a(Z) for the pure element (s) and/or compound(s) selected. It should be noted that the values for a(Z) may increase or decrease in a monotonically or non-monotonic manner. The minimum difference of 0.005 is for exemplary purposes only. Correspondingly, in respective embodiments of the invention, the at least one substance-selection criterion defines a minimum difference $|a(Z_1) - a(Z_2)|$ in the range of, e.g., 0.001 to 0.010 and which may be, for example, 0.002, 0.003, 0.004, 0.005, 0.006, 0.007, 0.008 or 0.009. $Z_1$ and $Z_2$ can be any one of two different atomic numbers.

According to an embodiment of the invention, the at least substance-selection criteria may further pertain to the substances suspected to be present in object **120.** It may for example be assumed that pure elements having an atomic number that is below 13 are not present in object **120** or are present in a quantity negligible with respect to the overall propagation-absorption to which X-ray radiation is subjected by object **120.**

A possible resulting selection of the at least one substance is schematically illustrated by selected-substance area **320,** which is also defined by a substance exclusion-area **330,** which for example excludes the pure elements having atomic number 22 and 23 since they provide at least approximately equal values for a(Z), as schematically illustrated by positions **331** and **332,** respectively. Moreover, selected-substance area **320** excludes pure elements having an atomic number below, e.g., 13. Otherwise stated, substance exclusion-area **330** may for example encompass elements having an atomic number that is below a predetermined threshold value such as, for example, 13.

It should be noted that the selected at least one substance illustrated herein with reference to **Figure 3** is for exemplary purposes only and should by no means to be construed as limiting. Accordingly, the selection made for the at least one substance may be different for other system configurations and/or applications.

The number of energy channels of the at least one selected X-ray energy range must be equal or higher than the number of the at least one selected substance. More specifically, the channels of the selected energy range correspond to the propagation-absorption values resolvable by composition determining system **100.**

Energy range selection:

As is indicated by box **215,** the method further includes according to an embodiment of the invention the procedure of selecting an energy range of the irradiation energy range according to at least one energy-selection criterion, yielding a selected energy range. Analysis of object **120** for the constituent elements is performed according to the selected energy range, as will be outlined herein below in greater detail.

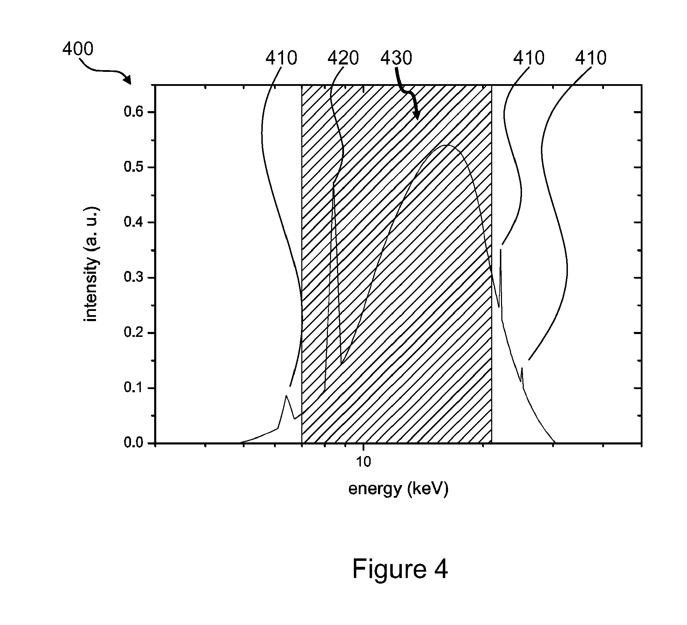

**Figure 4** schematically illustrates a graph **400** that exemplifies the emission curve (irradiation intensity in arbitrary units as a function of the energy in units of keV) of X-ray source **110** having discrete emission peaks. All substances irradiated by X-ray source **110** can emit discrete fluorescence emission peaks **410.** In addition, X-ray source **110** may emit peaks **420** generated by electron excitation in X-ray source **110.** The energy of peaks **410** and/or **420** is dependent on the material in X-ray source **110.** Moreover, the shaded area schematically indicates an exemplified selected energy range **430.** The energy-selection criteria for selecting an energy range such as, for example, selected energy range **430,** are outlined in greater detail herein below.

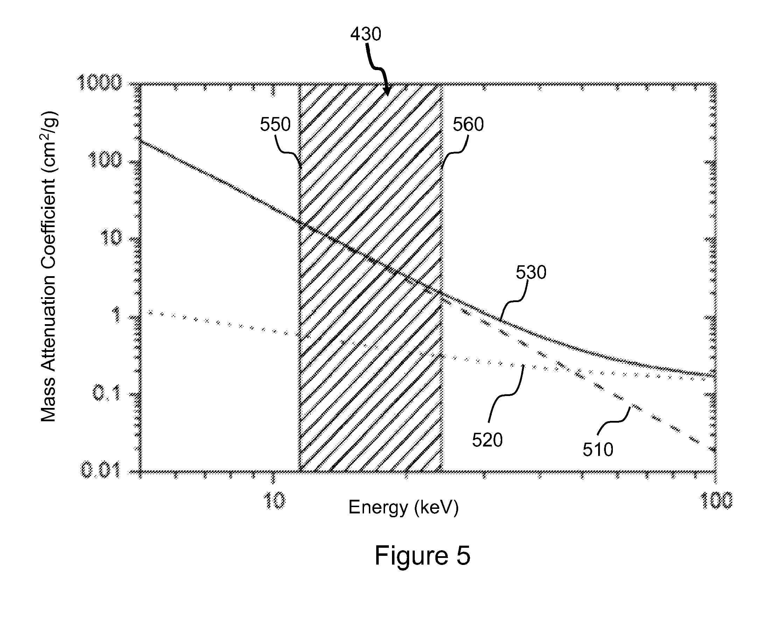

Further reference is now made to **Figure 5.** Generally, the mass attenuation coefficient for X-ray radiation in matter is a function of various physical phenomena, at least some of which are photo-absorption and scattering. The sum of the respective attenuation coefficients is the total attained absorption effect, as is schematically illustrated in **Figure 5** with respect to the element Aluminum. More specifically, dashed line **510** and dotted line **520** schematically illustrate the mass attenuation coefficient as a function of the emitted photons energy, due to photon-absorption and scattering, respectively. The sum of the photon-absorption and scattering effects is schematically illustrated with continuous line **530.**

The at least one energy-selection criterion refers to the upper limit of selected energy range **430,** which is based on the properties of propagation-absorption of X-ray photons by the irradiated matter and determined by the growing contribution of scattering on the other side. More specifically, the value of the absorption coefficients respective of scattering and photon absorption are element-dependent, whereby scattering is increasingly dominant, with respect to the photon absorption effect, the higher the irradiation energy. According to an embodiment of the invention, the upper limit of selected energy range **430** is determined according to a threshold defining the maximal percentage of the scattering effects with respect to the total mass attenuation effect. The threshold for the maximal percentage should be in the range of 1% - 90%, and is typically at least approximately 8%, 9%, 10%, 11 %, 12%, 13% ,14% or 15%.

With respect to **Figure 5,** lower limit **550** and upper limit **560** of the shaded area schematically show the lower and upper limit of selected energy range **430,** respectively. Lower limit **550** of an energy range is selected according to the lowest energy value at which enough photons are detectable by X-ray detector **130,** i.e., such that reliable detection of the photons is ensured. This energy value is dependent on the system configuration and the propagation-absorption characteristics of the object to be examined. Below a certain irradiation energy emitted by the X-ray source, the number of transmitted X-ray photons may not suffice for reliable detection by an X-ray detector. The lower detectable energy limit for X-ray radiation may depend on the size of the exit window of the X-ray source, the X-ray propagation medium and the length of the propagation path from the X-ray source to the X-ray detector, which ranges for example, from 10 cm to 100 cm. If the propagation medium is air only, then the lower energy limit of the X-ray radiation to be emitted by the X-ray source ensuring reliable detection by the X-ray detector is for example at least approximately 4 keV. If an object lies in the propagation path of the X-ray radiation, the attenuation is increased which correspondingly requires an increase in the lower energy limit of X-ray radiation to be emitted. For example if object **120** is cellulose having a thickness of 1 mm, the lower limit increases to at least approximately 8 keV. Correspondingly, the lowest energy value may be, for example, at least 4 keV, 5 keV or 6 keV, up to, for example, to 7 keV, 8 keV, 9 keV or 10 keV, and thus a useful energy range could be, for example, from 4 keV to 10 keV.

Upper limit **560** of selected energy range **430** is selected according to the energy at which scattering accounts for, e.g., 1% to 10%, of the total mass attenuation coefficient of the selected substance. It should be noted that the energy value at which photo absorption loses its dominance (i.e., accounts for less than 50% for the total attenuation) may be different for each substance and increases the higher the atomic number of the element. For example, the point where 50% of the propagation-absorption is due to the photo absorption is 2.4 keV for hydrogen (Z = 1) and 420.8 keV for tungsten (Z = 74).

Further energy ranges that may be excluded to obtain selected energy range **430** are the energy values having X-ray fluorescence peaks. Such X-ray fluorescence peaks may be created due to fluorescence photons generated outside X-ray source **110.** Thus, the path of these fluorescent photons may be unknown and can be independent of object **120.** If possible, energy ranges or peaks that can be independent of object **120** should be excluded to obtain a selected energy range that is only dependent of object **120.** Clearly, the selected energy range may differ for various system configurations and is at least determined according to the irradiated medium, which includes object **120** and the surroundings thereof.

In addition, energy ranges that may be excluded because of being independent on object **120** are those energy ranges that are affected by the materials employed in composition determining system **100.** Correspondingly, examples of individual energy ranges that may be excluded are, for example, the Kα and Kβ lines from iron at 6.4 and 7.1 keV, respectively, or the Lα and Lβ lines from lead at 10.5 and 12.6 keV, respectively. That is, because steel and lead are often used for the construction of X-ray equipment.

It should be noted that in view of the aforesaid, the term "selected energy range" may refer in some embodiments to a single continuous energy range. Alternatively, the term "selected energy range" may in some embodiments refer to a plurality of non-contiguous individual energy ranges with gaps in between, while each individual energy range itself being continuous.

Setup for measuring absorption over an energy range:

Various setups and methods may be employed for measuring photons and the respective energy ranges at X-ray detector **130.** In an embodiment of the invention, X-ray detector **130** may be spectrally sensitive (i.e. the X-ray detector is embodied by a spectrometer) and operative to resolve the energy value of the incident photons with a resolution of for example at least 1 keV. In another embodiment, X-ray detector **130** is spectrally insensitive while X-ray source **110** is a narrow-band X-ray source that is tunable and operative to cover the selected energy range. The maximum energy bandwidth of X-ray source **110** according to the latter embodiment is, for example, equal or lower than 1 keV.

Modeling the spectral absorption properties as a function of the atomic number Z:

Generally, the reduction in radiation intensity due to propagation-absorption can for example be characterized by the Beer-Lambert law:

$$I = I_0 e^{x\mu} \qquad (1)$$

wherein $I_0$ represents incident radiation intensity, $\mu$ the absorption coefficient, $x$ the thickness of object **120** through which radiation propagates and $I$ the intensity of the radiation after the propagation over distance $x$. For photo propagation-absorption, wherein the selected energy range lies (box **215**), the absorption coefficient $\mu$ of a chemical element with atomic number Z has the following dependencies:

$$\mu = \frac{\mu}{\rho} = \rho \cdot c \cdot E^{a(Z)} \cdot Z^{b(E)} \qquad (2)$$

where $\rho$ represents the density of the substance, $c$ a constant, $E$ the energy of the radiation, and Z the atomic number.

The exponents of the mathematical term

$$E^{a(Z)} \cdot Z^{b(E)} \qquad (3)$$

are not constant. More specifically, the exponent respective of the atomic number depends on the energy, and vice versa. Consequently, both parts of the multiplication are dependent on the radiation energy $E$ and the atomic number $Z$.

It should be noted that if the exponents were constant, a sum of $\mu$ from different elements could be rewritten into a product of two factors, wherein the first factor would only be energy-dependent, and wherein the second factor $Z$ would be a sum, each part of the sum being dependent on the atomic number only. Thus, the second factor could not be separated into elemental components with the help of energy dependent measurements. Therefore, no elemental composition could be determined as a function of the spectral propagation-absorption. However, since, as shown in equation 3, the multiplication of the energy *E* and the atomic number *Z* is cross-dependent, the relative density of each element can be determined based on the different absorption coefficient $\mu$ (*E*), i.e., multiple measurements with different energy *E* can be separated into the involved atomic number *Z*. As a consequence, the contribution of each element of object **120** to the absorption coefficient $\mu$ for selected energy range **430** can be determined.

Determining absorption coefficient $\mu$:

As is schematically illustrated by box **220,** the method for determining the elemental composition of object **120** includes according to an embodiment of the invention the procedure of determining the X-ray absorption coefficient $\mu$ of elemental matter in the selected X-ray irradiation energy.

Methods for determining the absorption coefficient $\mu$ of an object according to embodiments of the invention are exemplified herein. However, these methods should by no means to be construed as limiting. Accordingly, additional or alternative methods, e.g., as known in the art, for determining the absorption coefficient $\mu$ can be employed. In order to determine absorption coefficient $\mu$, two measurements for the EM energy are needed: a first measurement for obtaining the EM radiation energy before being incident on the object and a second measurement of the energy transmitted through the object. According to an embodiment of the invention, the first and the second measurement may be concurrently performed for a first and a second propagation path simultaneously, wherein the first propagation path is free of the object and the second propagation path includes the object. In another embodiment, the first and second measurement may be performed separately at different times. After performing the first measurement by keeping the propagation free of the object, the second measurement may for example be performed by moving the object into the propagation path. Depending on the stability of the X-ray source and the X-ray detector over time in terms of power stability over time and energy distribution, the delay required between the first and the second measurement may vary.

Absorption coefficients for pure elements can be determined according to a look-up-table (LUT) that associates data of pure elemental matter with the absorption coefficient at specific photon energy. The absorption coefficient for a compound can be determined from the comprising pure elements, or it may also be determined according to a LUT. Such a LUT may for example be based on the following publication: "X-Ray Form Factor, Attenuation, and Scattering Tables" by C. T. Chantler et al. (J. Phys. Chem. Ref. Data, Vol. 29, No. 4, pp. 597-1048, 2000 and J. Phys. Chem. Ref. Data, Vol. 24, No. 1, pp. 71-643, 1995). Additionally or alternatively, a method for determining the absorption coefficient for each of the at least one selected substance and selected energy range may include performing spectral reference measurements with the at least one selected substance. Accordingly, the absorption coefficients for the at least one selected substance can be determined by the LUT and/or by performing reference measurements; or the absorption coefficients for a selection of the substances can be determined according to a LUT while for the remaining substances the absorption coefficients may be determined according to measurements performed. In any case, the absorption coefficients $\mu$ for each of the selected substances in selected energy range **430** are determined separately.

Values of reference measurements for the elements Si and Al are exemplified herein below in Table 1 and Table 2, respectively. The reference measurements were performed with the following equipment: X-ray source: Hamamatsu L10101, X-ray detector: Amptek X-123; part number ZY-FS082MD-G3SP.

**Table 1:**

| | energy keV | reference measurement for Si | | absorption of reference measurement of Si calculated as logarithm of ratio of column A and B divided by the length and the density of the Silicon plate mu/rho 1/m |
| | | COLUMN A | COLUMN B | |
| | | No object in path counts per second counts/s | With object in path counts per second counts/s | |
|---|---|---|---|---|
| 1 | 11.5453 | 26.3281593 | 3.72303574 | 2.152635268 |
| 2 | 11.5831 | 26.2682551 | 3.76856483 | 2.136752429 |
| 3 | 11.6209 | 26.0112465 | 3.81651369 | 2.112018976 |
| 4 | 11.6587 | 25.9605212 | 3.88073092 | 2.091508143 |
| 5 | 11.6965 | 25.8692155 | 3.89085677 | 2.084763165 |
| 6 | 11.7343 | 25.6815316 | 3.9539944 | 2.059035776 |
| 7 | 11.7721 | 25.5010942 | 4.01121289 | 2.035465721 |
| 8 | 11.8099 | 25.216549 | 4.02152487 | 2.020291994 |
| 9 | 11.8477 | 25.2467427 | 4.09560736 | 2.001520989 |

(continued)

| | energy keV | reference measurement for Si COLUMN A | COLUMN B | absorption of reference measurement of Si calculated as logarithm of ratio of column A and B divided by the length and the density of the Silicon plate |
|---|---|---|---|---|
| | | No object in path counts per second counts/s | With object in path counts per second counts/s | mu/rho 1/m |
| 10 | 11.8855 | 25.1595434 | 4.12296948 | 1.990385861 |
| 11 | 11.9233 | 24.925482 | 4.22873246 | 1.952226653 |
| 12 | 11.9611 | 24.9411827 | 4.30419236 | 1.933455317 |
| 13 | 11.9989 | 25.1037455 | 4.3827049 | 1.920711968 |
| 14 | 12.0367 | 24.9404581 | 4.4636 | 1.893403425 |
| 15 | 12.0745 | 25.1247603 | 4.54892515 | 1.880667822 |
| 16 | 12.1123 | 25.270173 | 4.59490097 | 1.87595198 |
| 17 | 12.1501 | 25.0039856 | 4.65673564 | 1.849587915 |
| 18 | 12.1879 | 25.16993 | 4.75840362 | 1.833099803 |
| 19 | 12.2257 | 25.1291082 | 4.77437416 | 1.827626237 |
| 20 | 12.2635 | 25.0121982 | 4.84413827 | 1.8065305 |
| 21 | 12.3013 | 25.1387701 | 4.90329258 | 1.798728235 |
| 22 | 12.3391 | 25.0419088 | 4.99602598 | 1.773861541 |
| 23 | 12.3769 | 25.011232 | 5.09356171 | 1.751235472 |
| 24 | 12.4147 | 25.0435997 | 5.14489827 | 1.741622864 |
| 25 | 12.4525 | 25.0486722 | 5.24961888 | 1.719671332 |
| 26 | 12.4903 | 25.1170307 | 5.34797362 | 1.702243207 |
| 27 | 12.5281 | 25.1228279 | 5.3781278 | 1.696309661 |
| 28 | 12.5659 | 24.9506031 | 5.48564047 | 1.666957348 |
| 29 | 12.6037 | 24.9824877 | 5.53962017 | 1.657586827 |
| 30 | 12.6415 | 24.9841785 | 5.5737949 | 1.650893179 |

| | energy keV | reference measurement for Si COLUMN A | COLUMN B | absorption of reference measurement of Si calculated as logarithm of ratio of col A and B divided by the length and the density of the Silicon plate |
|---|---|---|---|---|
| | | No object in path counts per second counts/s | With object in path counts per second counts/s | mu/rho 1/m |
| 31 | 12.6793 | 24.9293468 | 5.66369902 | 1.6308666 |
| 32 | 12.7171 | 24.7868327 | 5.6871895 | 1.620002621 |
| 33 | 12.7549 | 24.766301 | 5.78208209 | 1.60088044 |
| 34 | 12.7927 | 24.6431108 | 5.82254825 | 1.587718025 |
| 35 | 12.8305 | 24.5899699 | 5.90456017 | 1.569950116 |

(continued)

|  | energy | counts per second | counts per second | mu/rho |
|---|---|---|---|---|
|  | keV | counts/s | counts/s | 1/m |
| 36 | 12.8683 | 24.3580825 | 5.94122914 | 1.552710121 |
| 37 | 12.9061 | 24.3059078 | 5.99442706 | 1.540540581 |
| 38 | 12.9439 | 24.1629106 | 6.04647094 | 1.524534006 |
| 39 | 12.9817 | 24.1860993 | 6.10722602 | 1.514587208 |
| 40 | 13.0195 | 24.0653246 | 6.16265759 | 1.499134897 |

Table 2:

|  |  | reference measurement for Al COLUMN C | COLUMN D | absorption of reference measurement of Al calculated as logarithm of ratio of columns C and D divided by the length and the density of the Aluminum plate |
|---|---|---|---|---|
|  |  | No object in path | With object in path |  |
|  | energy | counts per second | counts per second | mu/rho |
|  | keV | counts/s | counts/s | 1/m |
| 1 | 11.5453 | 26.6180334 | 2.41132693 | 1.617112286 |
| 2 | 11.5831 | 26.4591497 | 2.43546407 | 1.606373535 |
| 3 | 11.6209 | 26.3546915 | 2.49273251 | 1.588058452 |
| 4 | 11.6587 | 26.1933672 | 2.53666645 | 1.572158531 |
| 5 | 11.6965 | 26.0283819 | 2.54672158 | 1.565239511 |
| 6 | 11.7343 | 25.9663903 | 2.58918463 | 1.552498325 |
| 7 | 11.7721 | 25.8182453 | 2.62381094 | 1.539699398 |
| 8 | 11.8099 | 25.501454 | 2.65730393 | 1.522844054 |
| 9 | 11.8477 | 25.5024302 | 2.68739699 | 1.515286658 |
| 10 | 11.8855 | 25.2991274 | 2.74852352 | 1.494751541 |
| 11 | 11.9233 | 25.3813759 | 2.80552672 | 1.483114058 |
| 12 | 11.9611 | 25.3264622 | 2.86846172 | 1.466716422 |
| 13 | 11.9989 | 25.2134619 | 2.91736294 | 1.452321851 |
| 14 | 12.0367 | 25.3528208 | 2.99199276 | 1.439023809 |
| 15 | 12.0745 | 25.3240216 | 3.04455916 | 1.426530167 |
| 16 | 12.1123 | 25.3840606 | 3.11060475 | 1.413672917 |
| 17 | 12.1501 | 25.2710603 | 3.16278534 | 1.399465861 |
| 18 | 12.1879 | 25.3528208 | 3.20602 | 1.392498118 |
| 19 | 12.2257 | 25.397484 | 3.26078069 | 1.382278432 |
| 20 | 12.2635 | 25.3047408 | 3.31898954 | 1.367899919 |
| 21 | 12.3013 | 25.309866 | 3.37645088 | 1.356477548 |
| 22 | 12.3391 | 25.2961986 | 3.42373653 | 1.346748569 |
| 23 | 12.3769 | 25.3669763 | 3.48746727 | 1.336210386 |
| 24 | 12.4147 | 25.3203607 | 3.57461175 | 1.318351699 |

(continued)

|  | energy | counts per second | counts per second | mu/rho |
|---|---|---|---|---|
|  | keV | counts/s | counts/s | 1/m |
| 25 | 12.4525 | 25.3440346 | 3.65862154 | 1.303338002 |
| 26 | 12.4903 | 25.3479396 | 3.73310668 | 1.289869811 |
| 27 | 12.5281 | 25.3440346 | 3.81559735 | 1.275047911 |
| 28 | 12.5659 | 25.3220691 | 3.88359609 | 1.262568862 |
| 29 | 12.6037 | 25.1102241 | 3.96521869 | 1.24290511 |
| 30 | 12.6415 | 25.0226062 | 4.0355564 | 1.22871076 |

|  |  | reference measurement for Al (continued) | |  | absorption of reference measurement of Al |
|---|---|---|---|---|---|
|  |  | COLUMN C | COLUMN D |  | calculated as logarithm of ratio of col C and D divided by the length and the density of the Aluminum plate |
|  |  | No object in path | With object in path |  | |
|  | energy | counts per second | counts per second |  | mu/rho |
|  | keV | counts/s | counts/s |  | 1/m |
| 31 | 12.6793 | 25.1504942 | 4.12267677 |  | 1.21776087 |
| 32 | 12.7171 | 24.9877054 | 4.1562421 |  | 1.207927674 |
| 33 | 12.7549 | 24.8449297 | 4.22202244 |  | 1.193494566 |
| 34 | 12.7927 | 24.7087436 | 4.28797158 |  | 1.17935581 |
| 35 | 12.8305 | 24.7614608 | 4.32925308 |  | 1.174339001 |
| 36 | 12.8683 | 24.6413828 | 4.36648359 |  | 1.165299151 |
| 37 | 12.9061 | 24.58232 | 4.42985263 |  | 1.153980583 |
| 38 | 12.9439 | 24.4407645 | 4.49703153 |  | 1.13995616 |
| 39 | 12.9817 | 24.4153822 | 4.53749319 |  | 1.133224682 |
| 40 | 13.0195 | 24.2821248 | 4.58043849 |  | 1.123195786 |

Determining the absorption-coefficient dataset for the selected substances:

Based on the tabulated data of the absorption coefficient of a substance and/or based on these reference measurements for determining the absorption coefficient for a substance performed in selected energy range **430,** an absorption-coefficient dataset can be derived for the substances suspected to be constituent of object **120.** The absorption-coefficient dataset is herein embodied by coefficient matrix B, wherein each matrix entry is based on the expression

$$B_{i,j} = \left(\frac{\mu}{\rho}\right)_j (E_i),$$ wherein $j$ is the column index of the substances, i.e., each column represents a respective substance $i$ the row index of the energy channels, i.e., each row represents a different energy channel; $\mu$ the absorption coefficient and $\rho$ the density of the constituent substances. **Table 3** below exemplifies a matrix $B$ determined from the reference measurements for Si **(Table 1)** and Al **(Table 2):**

### TABLE 3:

|  | MATRIX B | |
|---|---|---|
| 1 | 2.15263527 | 1.61711229 |
| 2 | 2.13675243 | 1.60637353 |
| 3 | 2.11201898 | 1.58805845 |

(continued)

|  | MATRIX B | |
|---|---|---|
| 4 | 2.09150814 | 1.57215853 |
| 5 | 2.08476317 | 1.56523951 |
| 6 | 2.05903578 | 1.55249833 |
| 7 | 2.03546572 | 1.5396994 |
| 8 | 2.02029199 | 1.52284405 |
| 9 | 2.00152099 | 1.51528666 |
| 10 | 1.99038586 | 1.49475154 |
| 11 | 1.95222665 | 1.48311406 |
| 12 | 1.93345532 | 1.46671642 |
| 13 | 1.92071197 | 1.45232185 |
| 14 | 1.89340342 | 1.43902381 |
| 15 | 1.88066782 | 1.42653017 |
| 16 | 1.87595198 | 1.41367292 |
| 17 | 1.84958791 | 1.39946586 |
| 18 | 1.8330998 | 1.39249812 |
| 19 | 1.82762624 | 1.38227843 |
| 20 | 1.8065305 | 1.36789992 |
| 21 | 1.79872824 | 1.35647755 |
| 22 | 1.77386154 | 1.34674857 |
| 23 | 1.75123547 | 1.33621039 |
| 24 | 1.74162286 | 1.3183517 |
| 25 | 1.71967133 | 1.303338 |
| 26 | 1.70224321 | 1.28986981 |
| 27 | 1.69630966 | 1.27504791 |
| 28 | 1.66695735 | 1.26256886 |
| 29 | 1.65758683 | 1.24290511 |
| 30 | 1.65089318 | 1.22871076 |
| 31 | 1.6308666 | 1.21776087 |
| 32 | 1.62000262 | 1.20792767 |
| 33 | 1.60088044 | 1.19349457 |
| 34 | 1.58771803 | 1.17935581 |
| 35 | 1.56995012 | 1.174339 |
| 36 | 1.55271012 | 1.16529915 |
| 37 | 1.54054058 | 1.15398058 |
| 38 | 1.52453401 | 1.13995616 |
| 39 | 1.51458721 | 1.13322468 |
| 40 | 1.4991349 | 1.12319579 |

As indicated by box **230,** the method subsequently includes irradiating object **120** with X-ray radiation from a first of a plurality of different radiation directions, and subsequently, as indicated by box **240,** the procedure of determining, for the first irradiation direction, for each spatially resolvable transmission path the propagation-absorption of X-ray radiation by object **120** over the selected X-ray energy range. The selected energy range is chosen according to the energy-selection criteria outlined herein. Specifically, by employing a tunable irradiation source or an energy resolving X-ray detector, a propagation-absorption dataset can be constructed, herein embodied as vector $\bar{\bar{m}}$, each entry of vector $\bar{\bar{m}}$ representing the propagation-absorption of X-ray beam **115** by object **120** for an energy channel over the selected energy range for one transmission path. Considering for example, a transmission path of a first irradiation direction, the first element $m_1$ of vector $\bar{\bar{m}}$ may represent the propagation-absorption of a first energy channel of the selected energy range such as, for example, 11.54 keV, and wherein the second element $m_2$ of vector $\bar{\bar{m}}$ may represent the propagation-absorption of 11.58 keV for a respective second energy channel of the selected energy range for the same transmission path.

The results of such measurements with respect to the elements Al and Si are listed herein below in **Table 4:**

|  | Measurement | | Absorption |
| --- | --- | --- | --- |
|  | Column E counts per second counts/s | Column F counts per second counts/s | calculated as logarithm of ratio of columns E and F m x*mu |
| 1 | 26.3760271 | 3.69469294 | 1.965558087 |
| 2 | 26.1089494 | 3.7700609 | 1.93518699 |
| 3 | 25.9714441 | 3.82056483 | 1.916599357 |
| 4 | 26.021446 | 3.86338418 | 1.907377515 |
| 5 | 25.5752748 | 3.89763227 | 1.881256798 |
| 6 | 25.487531 | 3.94148608 | 1.866631522 |
| 7 | 25.3807961 | 3.99287669 | 1.849480881 |
| 8 | 25.2981006 | 4.04408258 | 1.833474595 |
| 9 | 25.0846307 | 4.08978364 | 1.813763266 |
| 10 | 25.1423253 | 4.18798367 | 1.792333297 |
| 11 | 24.9427983 | 4.24210822 | 1.771524767 |
| 12 | 24.8745264 | 4.32320267 | 1.749847755 |
| 13 | 24.9452022 | 4.38046755 | 1.739526042 |
| 14 | 24.9324613 | 4.48254681 | 1.715979252 |
| 15 | 25.0916021 | 4.55078438 | 1.707233605 |
| 16 | 24.9668377 | 4.62116476 | 1.686901665 |
| 17 | 25.0315036 | 4.65700149 | 1.681763393 |
| 18 | 25.0577066 | 4.77097707 | 1.658630308 |
| 19 | 25.0363115 | 4.77873553 | 1.656151253 |
| 20 | 25.0644376 | 4.86082751 | 1.640241321 |
| 21 | 24.9307786 | 4.96316538 | 1.614059407 |
| 22 | 25.1127568 | 5.0314399 | 1.607669751 |
| 23 | 25.1019391 | 5.1008597 | 1.593536002 |
| 24 | 24.9476061 | 5.18694175 | 1.570633606 |
| 25 | 25.0125125 | 5.25322122 | 1.560534745 |
| 26 | 25.1449696 | 5.31296142 | 1.554508474 |
| 27 | 25.0057815 | 5.40779945 | 1.531264804 |

(continued)

| Measurement | | Absorption |
|---|---|---|
| Column E counts per second counts/s | Column F counts per second counts/s | calculated as logarithm of ratio of columns E and F m x*mu |
| 28    24.9848672 | 5.43225709 | 1.525915611 |
| 29    24.8382269 | 5.52292032 | 1.503477108 |
| 30    24.7007215 | 5.59470462 | 1.485011908 |
| 31    24.6163432 | 5.67882857 | 1.466665608 |
| 32    24.7502427 | 5.70613098 | 1.467294086 |
| 33    24.7379826 | 5.75497238 | 1.458275576 |
| 34    24.5365324 | 5.81807458 | 1.439193747 |
| 35    24.3014271 | 5.89477257 | 1.416469124 |
| 36    24.2670508 | 5.93799832 | 1.407747402 |
| 37    24.1668065 | 5.96260374 | 1.399472804 |
| 38    24.265368 | 6.05585313 | 1.388024886 |
| 39    24.049975 | 6.12006368 | 1.368561456 |
| 40    23.9922805 | 6.15822795 | 1.359943065 |

Determining the integrated density of the selected substances:

As is indicated by box **250,** the method then includes the procedure of determining the integrated density of the at least one selected substance for each spatially resolvable transmission path for the first irradiation direction. Specifically, vector $\vec{m}$ and matrix B are to be constructed such that the row position of the energy channels match the row position of the energy channels of vector $\vec{m}$ such that the measured vector $\vec{m}$ can be mapped in correspondence with each pure element of Matrix *B* as follows:

$$B \cdot \vec{\sigma} = \vec{m} \qquad\qquad (4)$$

wherein each element of vector $\sigma_j = \rho_j{}^*x$ i.e., equals the specific density of one of the selected substances times the length for the same transmission or propagation path in object **120** only. Otherwise stated, each element of $\overleftarrow{\sigma}$ represents for a given pixel *Xmn* the integrated density of the respective substance. However, in order to be able to map matrix B with vector $\vec{m}$ equation (4) has to be manipulated into equation (5) as follows:

$$\vec{\sigma} = B^{-1} \cdot \vec{m} \qquad\qquad (5)$$

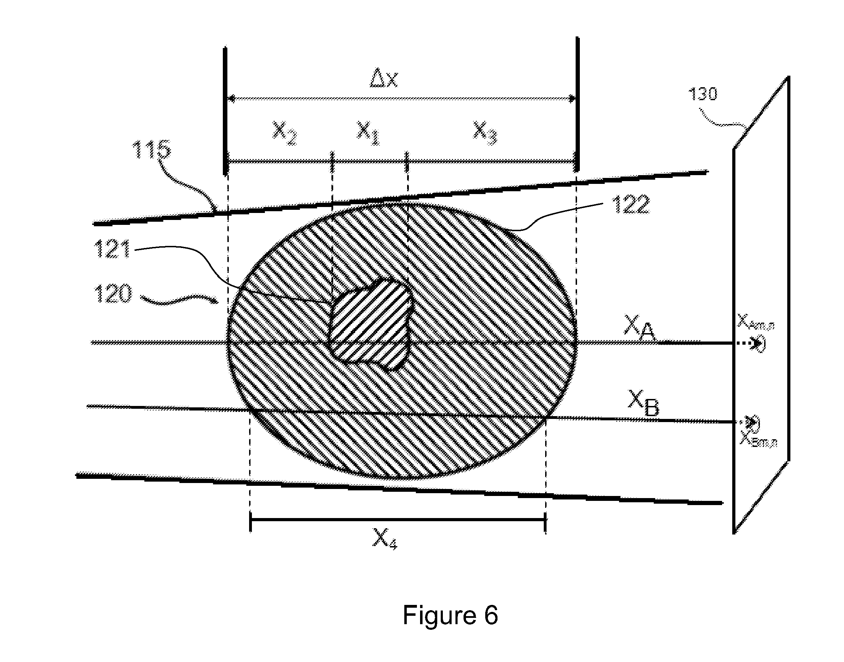

To determine whether the integrated density in object **120** indeed consists of the selected substances and if yes, determine their relative position in object **120,** the latter is irradiated with X-ray beam **115,** according to the above-outlined procedure enabling the construction of **Figure 6,** which schematically illustrates object **120** consisting for instance of two different substances: a first substance **121** having a density $\rho_1$ and a second substance **122** having a density $\rho_2$, wherein first substance **121** and second substance **122** are either one of a selected pure element or a selected compound. Specifically, object **120** is irradiated with X-ray beam **115,** according to the above-outlined procedure enabling the construction of vector $\vec{m}$. Axis X schematically illustrates the propagation direction of X-ray beam **115,** which also defines a transmission path $\Delta X$ through object **120**. To simplify the discussion that follows, integrated densities in object **120** are outlined with respect to transmission path $\Delta x_A$ and $\Delta x_B$, but this should by no means to construed as limiting, as other transmission paths may be present in object **120**. The integrated densities present along transmission path $\Delta x_A$ are representatively projected on X-ray detector **130** and visualized by a pixel $x_{A,mn}$.

The measured vector $\overline{\overline{m}}$ enables determining the integrated density of first substance **121** and the integrated density of second substance **122** in object **120** for each pixel $x_{mn}$. With respect to transmission path $X_{Amn}$ in object **120** exemplified in **Figure 6,** the values of the integrated densities of the selected substances are defined by the following mathematical terms:

$$Z_1 : x_1 \cdot \rho_1 \qquad\qquad (6)$$

$$Z_2 : (x_2 + x_3) \cdot \rho_2 \qquad\qquad (7)$$

and for transmission path $X_{Bmn}$ the integrated density of the selected substances would be defined as

$$Z_2 : \mathrm{x}_4 \cdot \rho_2 \qquad\qquad (8)$$

wherein $Z_1$ and $Z_2$ are the atomic numbers respective of first substance **121** and second substance **122.** Considering for example that first substance **121** of object **120** is Iron and second substance **122** is Aluminum and for example *X1=0.03 m, X2=0.05 m, X3=0.08 m* and *X4=0.12 m,* then the integrated densities for $X_A$ would be for Iron 0.24 kg/m$^2$ and for Aluminum 0.35 kg/m$^2$ and for $X_B$ the integrated density would be for Aluminum 0.32 kg/m$^2$. Clearly, the linear problem outlined in equation 5 can be solved for each transmission path spatially resolvable by X-ray detector **130,** thus obtaining an image rendered by pixels $x_{m,n}$ wherein for the corresponding transmission paths the integrated densities of the selected substances assumed to be present in object **120** are determined.

With respect to Tables 1-4 for Si and Al, the solution for the linear problem are as follows (Table 5):

**Table 5**

| | Result |
|---|---|
| **Atomic number** | **Sigma= x*rho** |
| | **kg/m$^2$** |
| 13 | 0.1797389 |
| 14 | 0.7708761 |

Determining the local density:

As is indicated by box **260,** the method then includes the procedure of determining for at least one spatially resolvable position the local density $\rho_n$ of the at least one selected substance in object **120.** Specifically, computerized models can be rendered providing for example cross-sectional images of object **120** giving information about the position of the selected substances in object **120** for each cross-section, for example, by employing a tomography scan, e.g., as known in the art. With respect to object **120** exemplified in **Figure 6,** two- or three dimensional of each structure respective of first substance **121** and second substance **122** can be determined, as well as the relative position of the structures in space to one another. Accordingly, the shape of the structures respective of first substance **121** and second substance **122** may be determined.

In an embodiment wherein the selected at least one substance is non-existent in object **120** then the integrated density equals zero.

Depending on the spatial dimensionality of the X-ray detector, i.e. if only zero-, one-, or two-spatial dimensional X-ray detectors are available, additional mechanical scanning of the X-ray detector may be necessary to obtain a higher spatial dimensional representation of object **120.** In order to obtain for example a two-dimensional cross-sectional view of object **120** or a three dimensional model thereof, employing a tomographic data acquisition method may necessary. Different principles therefor are well known in the art.

Steps **230** to **260** may be repeated a plurality of times for different irradiation directions, respectively. Accordingly, a three-dimensional representation of the object may be rendered in the form of cross-sectional images.

In some embodiments of the invention, as is indicated by box **270,** the method may include the procedure of estimating whether the selection of the at least one substance that was made in procedure **210** is correct. Although said procedure is exemplified as executed after procedure **260** only, this should by no means to be construed as limiting. Accordingly, procedure **270** may alternatively be executed after procedure **250** but prior to procedure **260.**

From equation (5) a quality of fit can be calculated as follows:

$$\vec{e} = B \cdot \vec{\sigma} - \vec{m} \qquad (9)$$

The accuracy of the measurement can be expressed by a probability which is a function of the term:

$$\frac{\|\vec{e}\|}{\|\vec{m}\|} = P \qquad (10)$$

which defines the norm of the normalized residue. The most important issue for an inaccurate measurement would be an incomplete selection of the elements.

It should be noted that the term "at least one substance" as used herein, can be replaced in respective embodiments of the invention by the term "at least two substances" or "at least three substances", for example. Correspondingly, in respective embodiments of the invention, each one of the procedures **210** to **270** outlined herein can performed for at least two substances, for at least three substances, for at least four substances, four at least five substances, and so forth up to for at least 20 substances, for example. Accordingly, procedure **210** may thus include selecting at least four substances for which analysis of an object is performed to obtain at least four selected substances, wherein the at least four substances are selected according to the at least one substance-selection criterion outlined herein. The steps **215** to **270** are then performed for these at least four substances. For example, step **250** would then analogously include the procedure of determining the integrated density of the at least four selected substances for each spatially resolvable transmission line for the first irradiation direction. Steps **230** to **260** may then be repeated for a second irradiation direction. In other words, steps **230** to **270** may be performed for a plurality of different irradiation directions.

Step **270** may be performed anytime upon completion of steps **230** to **260.** For example, step **270** may be performed at least once the first time, the last time, or each time upon completion of steps **230** to **260.**

It should be noted that although embodiments of the invention are disclosed herein with respect to X-rays only, this should by no means to be construed as limiting.

It should be noted that when reference is made to "a" or "an" element, this should not mean that there is only one of that element. Accordingly, "a" or "an" element as used herein may also mean that there is "at least one" of that element.

Although state diagrams, flow diagrams or both may be used to describe embodiments, the invention is not limited to those diagrams or to the corresponding descriptions. For example, flow need not move through each illustrated box or state, or in exactly the same order as illustrated and described.

Although various features of the invention may be described in the context of a single embodiment, the features may also be provided separately or in any suitable combination. Conversely, although the invention may be described herein in the context of separate embodiments for clarity, the invention may also be implemented in a single embodiment.

It will be appreciated by persons skilled in the art that the disclosed technique is not limited to what has been particularly shown and described hereinabove.

**Claims**

**1.** A method for determining the composition of an object (120) comprising the following procedures:

(230) irradiating said object (120) with X-ray radiation from an X-ray source (110) from a first irradiation direction;
(240) determining for each spatially resolvable transmission path respective of said first irradiation direction the propagation-absorption of X-ray radiation by said object (120) for at least one selected energy range (430) to yield propagation-absorption information for a respective at least one selected substance; and
(250) determining the integrated density for said at least one selected substance for at least one spatially resolvable transmission path of said first irradiation direction by respectively mapping according to said at least one selected substance the entries of said propagation-absorption dataset with the entries of an absorption-coefficient dataset,

**characterized in that**

said at least one selected substance and said selected energy range are selected according to at least one substance-selection criterion and at least one energy-selection criterion, respectively, in a manner such that a distinguishable dependency exists between the spectral absorption properties for each atomic number of the at least one selected substance and the selected energy range.

2. The method according to claim 1, wherein said at least one energy-selection criterion defines a lower limit (550) and an upper limit (560) of said selected energy range (430).

3. The method for identifying the elemental composition of said object (120) according to claim 2, wherein said upper limit (560) is determined according to a threshold defining a maximal percentage of scattering effects with respect to the total mass attenuation effect of said at least one selected substance.

4. The method for identifying the elemental composition of said object (120) according to any of the preceding claims, wherein said at least one energy-selection criterion defines that maximal 10-90% of the total mass attenuation coefficient are caused by scattering effect.

5. The method for identifying the elemental composition of said object (120) according to any of the preceding claims, wherein a lower limit (550) of said selected energy range (430) is selected according to the lowest energy value at which reliable detection of the photons is ensured.

6. The method for identifying the elemental composition of said object (120) according to any of the preceding claims, wherein said at least one energy-selection criterion defines the exclusion of irradiation energies of at least one of the following: energy where fluorescence peaks; and energy where electron excitation peaks occur.

7. The method for identifying the elemental composition of said object (120) according to any of the preceding claims, wherein said at least one energy-selection criterion defines the exclusion of irradiation energies that are affected in terms of emitted energy by substances employed by a composition determining system (100) used for performing the procedures of claim 1.

8. The method for identifying the elemental composition of said object (120) according to any of the preceding claims, wherein said at least one substance-selection criterion defines that the value of exponent a(Z) in $E^{a(Z)} \cdot Z^{b(E)}$ is unique for all occurring atomic numbers Z of the elements of the at least one selected substance.

9. The method for identifying the elemental composition of said object (120) according to any of the preceding claims, wherein said at least one substance-selection criterion defines a minimum difference $|a(Z_1) - a(Z_2)|$, wherein $Z_1$ and $Z_2$ are any one of two different atomic numbers.

10. The method for identifying the elemental composition of said object (120) according to claim 9, wherein said minimum difference is in the range of 0.001 to 0.010.

11. The method for determining the composition of an object (120) according to any of the preceding claims comprising the following procedure after step (250):

(260) determining for at least one spatially resolvable position in said object (120) the local density of said at least one selected substance.

12. The method for identifying the elemental composition of an object (120) according to any of the preceding claims comprising the following procedures prior to (230):

irradiating said object (120) with X-rays by said X-ray source (110) from said first irradiation direction:

(210) selecting, according to said at least one substance-selection criterion, at least one substance for which analysis of said object (120) is performed to obtain said at least one selected substance;
(215) selecting an energy range of an irradiation energy range according to said at least one energy-selection criteria to obtain a selected energy range (430); and

(220) determining the absorption coefficient of said at least one selected substance for said at least one selected X-ray energy range.

13. A composition determining system (100) operative to identify the composition of an object (120) said composition determining system (100) comprising:

an X-ray source (110) operative to emit X-rays; and
an X-ray detector (130) that enables determining the propagation-absorption of X-rays by said object (120) for a first irradiation direction;
wherein said X-ray detector (130) is operatively coupled with:

a controller (131);
a storage device (132) comprising a set of instructions (133); and
a power supply (134);
wherein said controller (131) when executing said instructions (133) is at least operative to perform the following procedures based on the determined propagation-absorption:

(250) determining, for at least one selected substance and at least one selected energy range, the integrated density in said object (120) for a transmission path respective of said first irradiation direction,

**characterized in that**
said at least one selected substance and said selected energy range are selected according to at least one substance-selection criterion and at least one energy-selection criterion, respectively, such that a distinguishable dependency exists between the spectral absorption properties for each atomic number of the at least one selected substance and the selected energy range.

14. The composition determining system (100) operative to identify the composition of an object (120) according to claim 13, wherein said controller (131) is operative to determine for a spatially resolvable position in the object the local density of said at least one selected substance.

15. Use of a composition determining system (100) according to claim 13 or 14.

FIGURE 1A

FIGURE 1B

EP 2 377 467 A1

210 — SELECTING AT LEAST ONE SUBSTANCE FOR WHICH ANALYSIS OF AN OBJECT IS PERFORMED TO OBTAIN AT LEAST ONE SELECTED SUBSTANCE

↓

215 — SELECTING AN ENERGY RANGE OF AN IRRADIATION ENERGY SPECTRUM ACCORDING TO AT LEAST ONE ENERGY-SELECTION CRITERIA TO OBTAIN A SELECTED X-RAY ENERGY RANGE

↓

220 — DETERMINING THE ABSORPTION COEFFICIENT FOR THE AT LEAST ONE SELECTED SUBSTANCE ACCORDING TO THE SELECTED X-RAY ENERGY RANGE

↓

230 — IRRADIATING THE OBJECT WITH X-RAYS FROM AN X-RAY SOURCE FROM A FIRST DIRECTION

↓

240 — DETERMINING, FOR THE FIRST RADIATION DIRECTION, FOR EACH SPATIALLY RESOLVABLE TRANSMISSION PATH THE ABSORPTION OF X-RAY RADIATION BY THE OBJECT OVER THE SELECTED X-RAY ENERGY RANGE

↓

250 — DETERMINING THE INTEGRATED DENSITY OF THE AT LEAST ONE SELECTED SUBSTANCE FOR EACH SPATIALLY RESOLVABLE TRANSMISSION LINE FOR THE FIRST IRRADIATION DIRECTION

↓

260 — DETERMINING FOR AT LEAST ONE SPATIALLY RESOLVABLE POSITION IN THE OBJECT THE LOCAL DENSITY OF THE AT LEAST ONE SELECTED SUBSTANCE

↓

270 — ESTIMATING WHETHER THE SELECTION OF THE AT LEAST ONE SUBSTANCE THAT WAS MADE IN PROCEDURE 210 IS CORRECT

Figure 2

Atomic Number

Figure 3

Figure 4

Figure 5

Figure 6

Europäisches
Patentamt

European
Patent Office

Office européen
des brevets

# EUROPEAN SEARCH REPORT

Application Number

EP 11 16 0047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FIRSCHING M ET AL: "Quantitative Material Reconstruction in CT with Spectroscopic X-ray Pixel Detectors -- a Simulation Study", NUCLEAR SCIENCE SYMPOSIUM CONFERENCE RECORD, 2006. IEEE, PISCATAWAY, NJ, USA, PISCATAWAY, NJ, USA, 29 October 2006 (2006-10-29), pages 2257-2259, XP031534978, ISBN: 978-1-4244-0560-2 * the whole document * ----- | 1-15 | INV. A61B6/03 G01N23/04 G01V5/00 G01N23/087 |
| X | US 2004/190679 A1 (WAGGENER ROBERT G [US] ET AL) 30 September 2004 (2004-09-30) * paragraph [0065] - paragraph [0074] * * paragraph [0129] * * figure 17 * ----- | 1-15 | |
| | | | TECHNICAL FIELDS SEARCHED (IPC) A61B G01N G01V |

The present search report has been drawn up for all claims

| Place of search | Date of completion of the search | Examiner |
|---|---|---|
| Munich | 25 July 2011 | Rouault, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**EP 2 377 467 A1**

## ANNEX TO THE EUROPEAN SEARCH REPORT
## ON EUROPEAN PATENT APPLICATION NO.

EP 11 16 0047

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2011

| Patent document cited in search report | Publication date | Patent family member(s) | Publication date |
|---|---|---|---|
| US 2004190679 A1 | 30-09-2004 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009066214 A
- US 20040190679 A
- WO 2008142446 A

**Non-patent literature cited in the description**

- **L. S. BIRKS et al.** Fluorescent X-Ray spectroscopy. *Anal. Chem.,* 1953, vol. 25 (5), 692-697
- **R.E. ALVAREZ ; A. MACOVSKI.** Energy-selective Reconstructions in X-ray Computerized Tomography. *Phys. Med. Biol.,* 1976, vol. 21 (5), 733-744
- **M. FIRSCHING et al.** Quantitative Material Reconstruction in CT with Spectroscopic X-ray Pixel Detectors - a Simulation Study. *2006 IEEE Nuclear Science Symposium Conference Record,* 2006, 2257-2259
- **C. T. CHANTLER et al.** X-Ray Form Factor, Attenuation, and Scattering Tables. *J. Phys. Chem. Ref. Data,* 2000, vol. 29 (4), 597-1048
- *J. Phys. Chem. Ref. Data,* 1995, vol. 24 (1), 71-643